# EUROPEAN PATENT APPLICATION

(11) **EP 4 776 480 A1**
(43) Date of publication of application: **15.07.2026**
(21) Application number: 24862606.1
(22) Date of filing: 22.08.2024
(51) Int. Cl.: H02K 1/278

(54) **ROTOR OF ELECTRICAL ROTATING DEVICE**

(30) Priority: 05.09.2023 JP 2023143394
(71) Applicant: IHI Corporation, Tokyo 135-8710 (JP)
(72) Inventor: TERAUCHI, Tetsuyuki, Tokyo 135-8710 (JP)
(74) Representative: MERH-IP Matias Erny Reichl Hoffmann Patentanwälte PartG mbB
(86) International application number: PCT/JP2024/029892
(87) International publication number: WO 2025/052953

(57) **Abstract**

A rotor (2) of an electrical rotating device includes a rotor core (5), plural permanent magnets (6) mounted on an outer circumferential surface of the rotor core (5), an armor ring (7) divided into several pieces in an axial direction that is a direction of a rotational axis (O) of the rotor (2) to hold the permanent magnets (6) from outside, a seal tube (8) sandwiched between the permanent magnets (6) and the armor ring (7), and a pair of end plates (9) that clamp the rotor core (5) and the permanent magnets (6) from both sides in the axial direction. An inner engagement protrusion (8a) is formed on a circumferential inner edge at one end of the seal tube (8) in the axial direction to engage with an outer circumferential edge of the end plate (9).

## Description

### TECHNICAL FIELD

The present disclosure relates to a rotor of an electrical rotating device.

### BACKGROUND ART

Patent Literature 1 listed below discloses a rotor of an electrical rotating device. The rotor disclosed in the Patent Literature 1 is a rotor of an SPM (Surface Permanent Magnet) type electrical rotating device, and plural permanent magnets are circumferentially mounted on its outer circumferential surface. The plural permanent magnets on the outer circumferential surface also form plural rows parallel to the direction of the rotor's rotational axis. To prevent the permanent magnets from being dislodged from the rotor by the centrifugal force of the rotating rotor, an armor ring is also attached to the outside of the permanent magnets. The armor ring is referred to as a retaining sleeve in the Patent Literature 1. In order to suppress heat generation due to eddy current losses in the armor ring, the armor ring is divided into several segments in the axial direction, which is the direction of the rotor's rotational axis. In the Patent Literature 1, the armor ring that is divided, i.e., the retaining sleeve that is divided, is called a divided sleeve.

In addition, in the rotor disclosed in the Patent Literature 1, flow passages of coolant for cooling the rotor, including the permanent magnets, are formed on the outer or inner circumferential surfaces of the permanent magnets along the above-mentioned axial direction. To prevent the coolant from leaking from the inside of the rotor to the outside through each seam between axially adjacent permanent magnets and through each seam between the axially adjacent armor rings due to the centrifugal force of the rotating rotor, the above-mentioned rotor is also provided with a seal tube. The seal tube is referred to as a seal ring in the Patent Literature 1. The seal tube is provided between the permanent magnets and the armor ring.

### CITATION LIST

### PATENT LITERATURE

Patent Literature 1: PCT International Publication No. WO2021/192444

### SUMMARY OF THE INVENTION

### PROBLEM TO BE SOLVED

In the rotor disclosed in the above Patent Literature 1, there is concern about axial misalignment of the seal tube with respect to the permanent magnets in the axial direction of the rotor.

Therefore, an object of the rotor of a rotating electric machine according to the present disclosure is to effectively restrict axial misalignment of the seal tube with respect to the permanent magnets in the axial direction of the rotor.

### SOLUTION TO THE PROBLEM

A rotor of an electrical rotating device according to the present disclosure includes a rotor core; a plurality of permanent magnets mounted on an outer circumferential surface of the rotor core to be aligned in a circumferential direction; an armor ring divided into several pieces in an axial direction that is a direction of a rotational axis of the rotor to hold the permanent magnets from outside; a seal tube sandwiched between the permanent magnets and the armor ring; and a pair of end plates that clamp the rotor core and the permanent magnets from both sides in the axial direction, wherein an inner engagement protrusion is formed on a circumferential inner edge at one end of the seal tube in the axial direction to engage with an outer circumferential edge of the end plate.

The inner engagement protrusion may be formed also on a circumferential inner edge at another end of the seal tube in the axial direction to engage with an outer circumferential edge of the end plate.

Here, an engagement surface of the inner engagement protrusion, which engages with the outer circumferential edge of the end plate, may be an annular flat surface perpendicular to the axial direction.

Alternatively, an engagement surface of the inner engagement protrusion, which engages with the outer circumferential edge of the end plate, may be an annular tapered surface whose inner diameter decreases toward an end edge of the seal tube in the axial direction.

In addition, an outer engagement protrusion may also be formed on a circumferential outer edge at the one end of the seal tube in the axial direction to engage with a circumferential inner edge of the armor ring.

The outer engagement protrusion may be formed also on a circumferential outer edge at another end of the seal tube in the axial direction to engage with a circumferential inner edge of the armor ring.

Here, an engagement surface of the outer engagement protrusion, which engages with the circumferential inner edge of the armor ring, may be an annular flat surface perpendicular to the axial direction.

Alternatively, an engagement surface of the outer engagement protrusion, which engages with the circumferential inner edge of the armor ring, is an annular tapered surface whose outer diameter increases toward an end edge of the seal tube in the axial direction.

### ADVANTAGEOUS EFFECT

According to the rotor of the electrical rotating device in the present disclosure, a position shift of the seal tube in the axial direction of the rotor relative to the permanent magnets can be prevented effectively.

### BRIEF DESCRIPTION OF DRAWINGS

[FIG. 1] Fig. 1 is a cross-sectional view taken on a section including a rotational axis of a rotor according to embodiments.
[FIG. 2] Fig. 2 is a cross-sectional view taken on a section perpendicular to the rotational axis of the rotor.
[FIG. 3] Fig. 3 is an enlarged cross-sectional view of a featured portion in a rotor according to a first embodiment.
[FIG. 4] Fig. 4 is an enlarged cross-sectional view of a featured portion in a rotor according to a second embodiment.

### DESCRIPTION OF EMBODIMENTS

Hereinafter, embodiments (first and second embodiments) of a rotor 2 of an electrical rotating device 1 will be described with reference to the drawings.

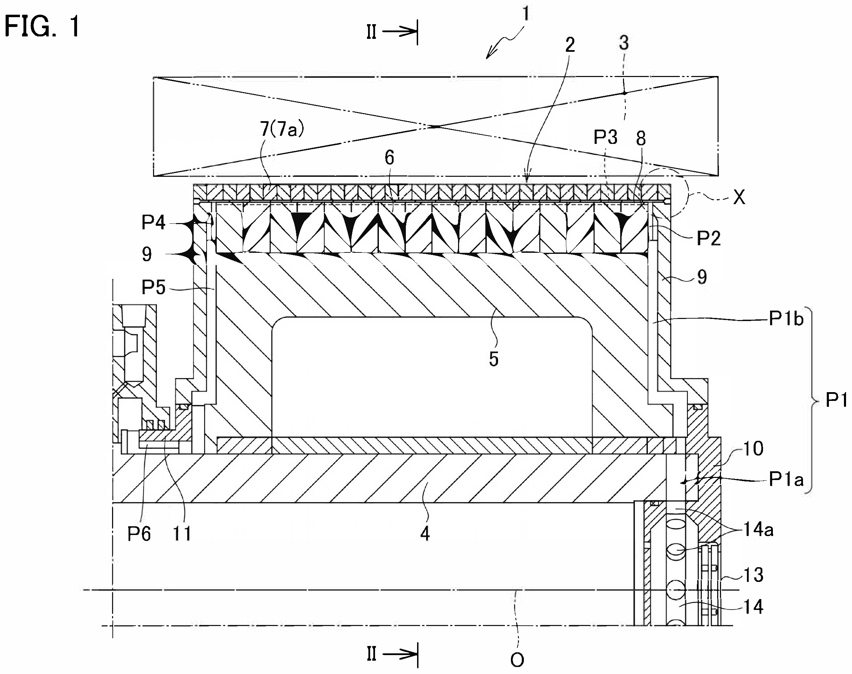

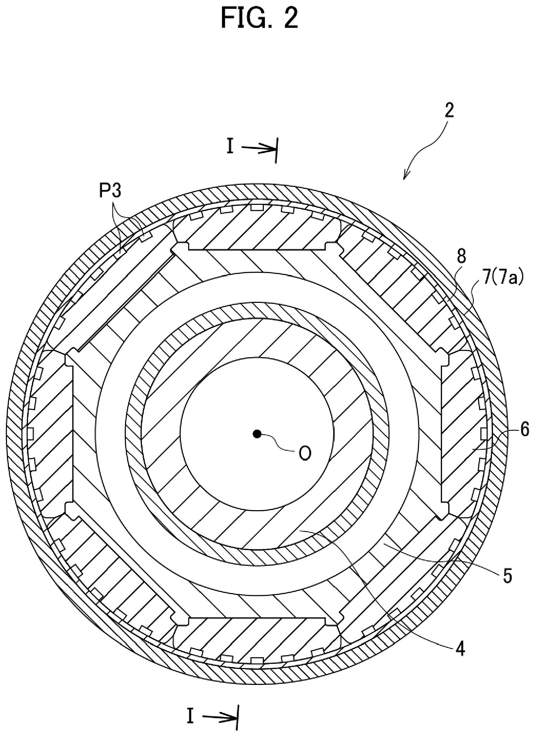

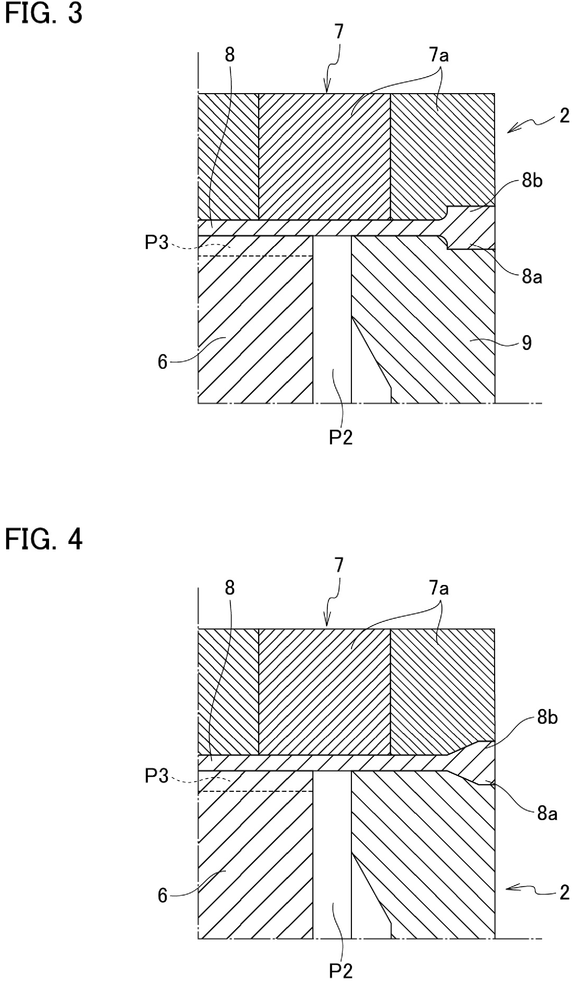

The rotor 2 in the present embodiment is the rotor of the electrical rotating device 1. The electrical rotating device 1 in the present embodiment functions as a generator. Fig. 1 is a cross-sectional view of the rotor 2 on a section including a rotational axis O, and Fig. 2 is a cross-sectional view on a section perpendicular to the rotational axis O. Fig. 1 is also a cross-sectional view taken along a line I-I shown in Fig. 2, and shows only one side with respect to the rotational axis O. Fig. 2 is also a cross-sectional view taken along a line II-II shown in Fig. 1. Differences between the first and second embodiments are not apparent in Fig. 1 and Fig. 2. Fig. 3 and Fig. 4 are enlarged cross-sectional views of an X portion shown in Fig. 1, and Fig. 3 shows the first embodiment and Fig. 4 shows the second embodiment. Note that the size ratio of the components in Fig. 1 is slightly different from the size ratio of the components in Fig. 2, but this does not hinder the understanding of the embodiments.

As shown in Fig. 1, the electrical rotating device 1 includes the rotor 2 rotatable about the rotational axis O and a stator 3 located outside the rotor 2. A rotary shaft 4 of the rotor 2 is monolithically formed with a rotary shaft of an external device (not shown) provided to the left in Fig. 1. The electrical rotating device 1, which is a generator, generates electricity when the rotor 2 is rotated by the rotary shaft 4 rotated by the external device. The rotary shaft 4 in the present embodiment is a hollow shaft. The rotary shaft 4 extending from the rotor 2 toward the external device is rotatably supported by bearings inside the external device.

The rotor 2 includes a rotor core 5 fixed to the rotary shaft 4, plural permanent magnets 6 mounted on an outer circumferential surface of the rotor core 5 to be aligned in a circumferential direction, and an armor ring 7 located radially outside the permanent magnets 6. The electrical rotating device 1, as a generator in the present embodiment, is an SPM-type generator. The cross-section, perpendicular to the rotational axis O, of the rotor 2 has an approximately octagonal shape as shown in Fig. 2, and the interior of the rotor core 5 is hollow. The permanent magnets 6 are attached to each side of the octagon of the rotor core 5, and eight permanent magnets 6 are aligned in the circumferential direction. On the circumferential surface of the rotor core 5, the permanent magnets 6 form eight rows parallel to the rotational axis O. Hereafter, the direction of the rotational axis O of the rotor 2 is also referred to simply as an axial direction.

The armor ring 7 is a hollow cylindrical metal member located outside the permanent magnets 6 to hold the permanent magnets 6 so that the permanent magnets 6 are not dislodged from the rotor core 5 by centrifugal force when the rotor 2 rotates. The armor ring 7 may be made of a material other than metal, for example, carbon fiber reinforced plastic (CFRP). Eddy currents are generated in the metallic armor ring 7 as the magnetic flux density changes due to the rotation of the rotor 2, and thus heat is generated in the armor ring 7. In the present embodiment, in order to suppress the heating of the permanent magnets 6 by the heat of the armor ring 7, the armor ring 7 is configured with a number of divided armor rings 7a each having a narrow axial width to reduce the eddy current.

The adjacent divided armor rings 7a are closely contacted with each other so that the entire armor ring 7 forms a cylindrical shape to cover all the permanent magnets 6. Since the armor ring 7 is configured with the plural annular divided armor rings 7a, the electrical resistance between the adjacent divided armor rings 7a increases and the interlinkage magnetic flux per each divided armor ring 7a decreases, and thus the eddy currents reduce and losses are reduced. As a result, the heat generation due to the eddy current loss can also be reduced.

In addition, a hollow cylindrical seal tube 8 is sandwiched between the permanent magnets 6 and the armor ring 7. The seal tube 8 is a component that prevents the coolant circulating inside the rotor 2 from leaking out of the rotor 2 through the seams of the divided armor rings 7a. The circulation of the coolant and the seal tube 8 will be explained in detail later.

A pair of end plates 9 that clamp the permanent magnets 6 from both sides in the axial direction are fixed onto both end faces of the rotor core 5. A retaining disk 10 or a retaining ring 11 is placed in a hole formed in the center of each of the circular end plates 9. The retaining disk 10 is fixed to the end (the end on the right side in Fig. 1) of the rotary shaft 4, which is a hollow shaft, opposite the external device. The retaining ring 11 is fixed to the rotary shaft 4 at a position (the left side in Fig. 1) closer to the external device.

In a portion X shown in Fig. 1, the outer circumferential edge of the end plate 9 is in contact with the inner circumferential surface of the seal tube 8. The X portion will be explained in detail later with reference to Figs. 3 and 4. An O-ring is attached to the circumferential contacting surface between the outer circumferential edge of the retaining disk 10 and the inner circumferential edge of the end plate 9 to prevent leakage of the coolant. An inlet port 13 of the coolant is formed at the center of the retaining disk 10, and the inlet port 13 is connected to a feed pump (not shown in the drawings) of the coolant and a supply source (not shown in the drawings) of the coolant.

Next, circulation passages of the coolant will be explained with reference to Fig. 1. A circular storage chamber 14 is formed inside the center portion of the retaining disk 10 to receive the coolant supplied to the inside of the rotor 2 through the inlet port 13. The rotational axis O of the rotor 2 passes through the center of the circular storage chamber 14. Twelve outlet ports 14a are formed on the inner surface of the storage chamber 14. Radial inlet flow passages P1 are formed from the outlet ports 14a, respectively, so as to extend radially from the rotational axis O. That is, each of the radial inlet flow passages P1 is extended in the radial direction of the rotor 2 and reaches the position of the permanent magnets 6.

More particularly, each of the radial inlet flow passages P1 is formed by a first segment P1a formed in the rotary shaft 4 and a second segment P1b formed on the end plate 9. The second segment P1b formed on the end plate 9 is formed as a groove on the inner surface of the end plate 9. Each radially outer end of the radial inlet flow passages P1 is communicated with an annular inlet flow passage P2 formed between the outer circumference of the end plate 9 and the permanent magnets 6. The annular inlet flow passage P2 is formed between the radially outer ends of the radial inlet flow passages P1 and the seal tube 8, and the center of the annular inlet flow passage P2 coincides with the rotational axis O. At several locations inside the annular introduction channel P2 along its circumferential direction, the inner surface of the end plate 9 is in contact with the permanent magnets 6 so as not to block the coolant flow in the annular inlet channel P2.

As shown in Fig. 2, five axial flow passages P3 parallel to the axial direction are formed on each outer circumferential surface of the permanent magnets 6. The axial flow passages P3 are coolant flow passages formed on the surfaces of the permanent magnets 6. One end of each axial flow passage P3 is connected to the above-mentioned annular inlet flow passage P2. On the other hand, another end of each axial flow passage P3 is connected to an annular outlet flow passage P4, which is similar to the annular inlet flow passage P2. Plural radial outlet flow passages P5, which are similar to the radial inlet flow passages P1, are formed in the radial direction, i.e., extended radially, and their respective radially outer ends are communicated with the annular outlet flow passage P4. Each radial outlet flow passage P5 is formed with a groove on the inner surface of the end plate 9 and a groove on the end face of the rotor core 5. Each radially inner end of the radial outlet flow passages P5 reaches the rotary shaft 4 and is communicated with an annular discharge flow passage P6 formed between the rotary shaft 4 and the retaining ring 11. The annular discharge flow passage P6 is communicated with the external device which is not shown in the drawings.

The coolant flow inside the rotor 2 is described below. The coolant supplied to the storage chamber 14 flows in the radial inlet flow passages P1 toward the outer circumference due to the supply fluid pressure and centrifugal force caused by the rotations of the rotor 2. The coolant flowing in the radial inlet flow passages P1 contacts the end surface of the rotor core 5 and cools the rotor core 5 as well. The coolant is introduced from the radial inlet flow passages P1 into the axial flow passages P3 through the annular inlet flow passage P2, and cools the permanent magnets 6 while flowing through the axial flow passages P3. Since the axial flow passages P3 are formed on the surfaces of the permanent magnets 6 close to the armor ring 7 in the present embodiment, the coolant flowing in the axial flow passages P3 also cools the armor ring 7 through the seal tube 8.

The coolant flowing through the axial flow passages P3 is led out to the annular outlet passage P4, and then to the radial outlet passages P5. The coolant flows toward the rotational axis O in the radial outlet flow passages P5 due to the supply pressure, and then is discharged into the annular discharge flow passage P6. The coolant discharged into the annular discharge flow passage P6 is supplied to the external device that is not shown in the drawings.

Next, the seal tube 8 placed between the permanent magnets 6 and the armor ring 7 is described. As mentioned above, the armor ring 7 is configured with the divided armor rings 7a that are divided along the axial direction. Therefore, a seam is formed between adjacent divided armor rings 7a. The seal tube 8 prevents the coolant flowing in the axial flow passages P3 from leaking from the seams of the divided armor rings 7a due to the centrifugal force caused by the rotation of the rotor 2. The seal tube 8 covers the seams of the divided armor rings 7a from the radially inside of the armor ring 7 to prevent the leakage of the coolant through the seams.

The seal tube 8 is attached to the outside of the permanent magnets 6, by press-fit or the like, by expanding it once in the radial direction and then shrinking it. There is a concern that the position of the seal tube 8 attached in this way may shift in the axial direction relative to the permanent magnets 6. Therefore, in the first embodiment shown in Fig. 3 that is an enlarged view of the portion X shown in Fig. 1, an inner engagement protrusion 8a is formed on a circumferential inner edge at one end of the seal tube 8 in the axial direction (a right end in Fig. 1) to engage with the outer circumferential edge of the end plate 9.

The inner engagement protrusion 8a is formed around the entire circumferential inner edge of the seal tube 8. In addition, an engagement step that engages with the inner engagement protrusion 8a is formed on the outer circumferential edge of the end plate 9 in accordance with the shape of the inner engagement protrusion 8a. In the present embodiment, the engagement surface of the inner engagement protrusion 8a, which engages with the outer circumferential edge of the end plate 9, is an annular flat surface perpendicular to the axial direction. By forming the inner engagement protrusion 8a, which engages with the outer circumferential edge of the end plate 9, on the circumferential inner edge of the seal tube 8 in this manner, a leftward position shift of the seal tube 8 in Fig. 3 relative to the permanent magnets 6 can be prevented. In addition, since the engagement surface of the inner engagement protrusion 8a, which engages with the outer circumferential edge of the end plate 9, is the annular flat surface perpendicular to the axial direction, the seal tube 8 doesn't get over the engagement surface to shift leftward in Fig. 3, and thereby the seal tube 8 and the end plate 9 are firmly engaged with each other. As a result, the position shift of the seal tube 8 in the axial direction relative to the permanent magnets 6 can be securely prevented.

In the present embodiment, an inner engagement protrusion 8a is also formed on the circumferential inner edge at the other end of the seal tube 8 in the axial direction (a left end in Fig. 1) to engage with the outer circumferential edge of the end plate 9. Therefore, a rightward position shift of the seal tube 8 relative to the permanent magnets 6 can be prevented also at the left end in Fig. 1 in the present embodiment. That is, in the present embodiment, both leftward and rightward position shifts of the seal tube 8 in Fig. 1 relative to the permanent magnets 6 can be prevented. Also here, since the engagement surface of the inner engagement protrusion 8a, which engages with the outer circumferential edge of the end plate 9, is an annular flat surface perpendicular to the axial direction, the seal tube 8 doesn't get over the engagement surface to shift rightward at the left end in Fig. 1, and thereby the seal tube 8 and the end plate 9 are firmly engaged with each other.

Furthermore, the armor ring 7 is also attached to the outside of the seal tube 8, by press-fit or the like, by expanding it once in the radial direction and then shrinking it. There is also a concern that the position of the armor ring 7 attached in this way may shift in the axial direction relative to the seal tube 8. Therefore, in the present embodiment shown in Fig. 3, an outer engagement protrusion 8b that engages with the circumferential inner edge of the armor ring 7 is also formed on the circumferential outer edge at the one end of the seal tube 8 in the axial direction (the right end in Fig. 1). More particularly, the outer engagement protrusion 8b that engages with the circumferential inner edge of the outermost divided armor ring 7a in the axial direction is formed at the one end of the seal tube 8 in the axial direction.

The outer engagement protrusion 8b is formed around the entire circumferential outer edge of the seal tube 8. In addition, an engagement step that engages the outer engagement protrusion 8b is formed on the circumferential inner edge of the armor ring 7, i.e., the outermost divided armor ring 7a in accordance with the shape of the outer engagement protrusion 8b. In the present embodiment, the engagement surface of the outer engagement protrusion 8b, which engages with the circumferential inner edge of the armor ring 7, is an annular flat surface perpendicular to the axial direction. By forming the outer engagement protrusion 8b, which engages with the circumferential inner edge of the armor ring 7, on the circumferential outer edge of the seal tube 8 in this manner, a leftward position shift of the seal tube 8 in Fig. 3 relative to the armor ring 7 can be prevented. In other words, a rightward position shift of the armor ring 7 in Fig. 3 relative to the seal tube 8 can be prevented. In addition, since the engagement surface of the outer engagement protrusion 8b, which engages with the circumferential inner edge of the armor ring 7, is the annular flat plane perpendicular to the axial direction, the seal tube 8 doesn't get over the engagement surface to shift leftward in Fig. 3, and thereby the seal tube 8 and the armor ring 7 are firmly engaged with each other. As a result, the position shift of the armor ring 7 in the axial direction relative to the seal tube 8 can be securely prevented.

In the present embodiment, an outer engagement protrusion 8b is similarly formed on the circumferential outer edge at the other end of the seal tube 8 in the axial direction (the left end in Fig. 1) to engage with the circumferential inner edge of the armor ring 7. Therefore, a rightward position shift of the seal tube 8 relative to the armor ring 7 can be prevented also at the left end in Fig. 1 in the present embodiment. In other words, a leftward position shift of the armor ring 7 relative to the seal tube 8 can be prevented at the left end in Fig. 1. That is, in the present embodiment, both leftward and rightward position shifts of the armor ring 7 in Fig. 1 relative to the seal tube 8 can be prevented. Also here, since the engagement surface of the outer engagement protrusion 8b, which engages with the circumferential inner edge of the armor ring 7, is an annular flat surface perpendicular to the axial direction, the seal tube 8 doesn't get over the engagement surface to shift rightward at the left end in Fig. 1, and thereby the seal tube 8 and the armor ring 7 are firmly engaged with each other.

Next, the second embodiment will be described with reference to Fig. 4. The difference between the present embodiment and the above-described first embodiment shown in Fig. 3 is the form of the engagement surface between the inner engagement protrusion 8a and the outer circumferential edge of the end plate 9, and the form of the engagement surface between the outer engagement protrusion 8b and the circumferential inner edge of the armor ring 7. Since the other configurations are the same, the identical or equivalent configurations are labelled with the identical reference numbers and their redundant descriptions will be omitted.

Also in the present embodiment, an inner engagement protrusion 8a is formed on the circumferential inner edge at the one end of the seal tube 8 in the axial direction (the right end in Fig. 1) to engage with the outer circumferential edge of the end plate 9. In addition, an inner engagement protrusion 8a is formed also on the circumferential inner edge of the other end of the seal tube 8 in the axial direction (the left end in Fig. 1) to engage with the outer circumferential edge of the end plate 9. Therefore, the position shift of the seal tube 8 in the axial direction relative to the permanent magnets 6 can be prevented.

Here in the present embodiment, the engagement surface of the inner engagement protrusion 8a with the outer circumferential edge of the end plate 9 is an annular tapered surface whose inner diameter decreases toward the end edge of the seal tube 8 in the axial direction. As described above, the seal tube 8 is attached onto the outer circumferential surface of the permanent magnets 6, by press-fit or the like, by expanding it once in the radial direction and then shrinking it. By forming the above-mentioned tapered surface, the position of the seal tube 8 in the axial direction relative to the end plate 9 is naturally guided to the proper position due to the annular tapered surface while the seal tube 8 radially shrinks. In addition, during the process, the permanent magnets 6, which are aligned in the axial direction, are subjected to a clamping force from both sides, so that the permanent magnets 6 can be held firmly not only in the radial direction but also in the axial direction.

In addition, an outer engagement protrusion 8b is formed at the one end of the seal tube 8 in the axial direction (the right end in Fig. 1) to engage with the circumferential inner edge of the armor ring 7. Furthermore, an outer engagement protrusion 8b is formed also on the circumferential outer edge of the seal tube 8 at the other end of the axial direction (the left end in Fig. 1) to engage with the circumferential inner edge of the armor ring 7. Therefore, the position shift of the seal tube 8 in the axial direction relative to the armor ring 7 can be prevented. In other words, the position shift of the armor ring 7 in the axial direction relative to the seal tube 8 can be prevented.

Then, the engagement surface of the outer engagement protrusion 8b with the circumferential inner edge of the armor ring 7 is an annular tapered surface whose outer diameter increases toward the end edge of the seal tube 8 in the axial direction. As described above, the armor ring 7, i.e., the plural divided armor rings 7a, is attached onto the outer circumferential surface of the seal tube 8, by press-fit or the like, by expanding it once in the radial direction and then shrinking it. By forming the annular above-mentioned tapered surface, the position of the armor ring 7 in the axial direction relative to the seal tube 8 is naturally guided to the proper position due to the annular tapered surface while the armor ring 7 radially shrinks. In addition, during this process, the divided armor rings 7a, which are aligned in the axial direction, are subjected to a clamping force from both sides, so that the plural divided armor rings 7a can be held firmly in the axial direction.

And, the pressure of the coolant in the annular inlet flow passage P2 and the annular discharge flow passage P6 increases due to the centrifugal force as the rotor 2 rotates. By forming the inner engagement protrusion(s) 8a in the seal tube 8 to engage with the outer circumferential edge of the end plate 9 as in the above embodiments, outward deflection of the outer circumferential edge of the end plate(s) 9 in the axial direction due to the coolant pressure can also be prevented.

The rotor 2 of the electrical rotating device 1 according to the above embodiments (the first embodiment and the second embodiment) includes the rotor core 5, the permanent magnets 6, the armor ring 7, the seal tube 8, and the end plates 9. The permanent magnets 6 are mounted on the outer circumferential surface of the rotor core 5 to be aligned in the circumferential direction. The armor ring 7 is divided into several pieces in the axial direction of the rotor 2 to hold the permanent magnets 6 from the outside. The seal tube 8 is sandwiched between the permanent magnets 6 and the armor ring 7. The pair of end plates 9 clamps the rotor core 5 and the permanent magnets 6 from both sides in the axial direction. Here, the inner engagement protrusion 8a is formed on the circumferential inner edge at the one end of the seal tube 8 in the axial direction to engage with the outer circumferential edge of the end plate 9. Therefore, the position shift of the seal tube 8 in the axial direction relative to the end plates 9, i.e., relative to the permanent magnets 6, can be prevented.

Also in the above embodiments, the inner engagement protrusion 8a is formed on the circumferential inner edge at the other end of the seal tube 8 in the axial direction to engage with the outer circumferential edge of the end plate 9. Thus, it is preferable to form the inner engagement protrusion 8a not only at the one end of the seal tube 8 but also at the other end, i.e., the inner engagement protrusions 8a are formed at both ends of the seal tube 8 in the axial direction, respectively. According to this, the position shift of the seal tube 8 in both directions along the axial direction relative to the end plate 9, i.e., relative to the permanent magnets 6, can be prevented.

Furthermore, in the above first embodiment, the engagement surface of the inner engagement protrusion 8a, which engages with the outer circumferential edge of the end plate 9, is the annular flat surface perpendicular to the axial direction. By forming the engagement surface as the annular flat surface perpendicular to the axial direction, the seal tube 8 and the end plate 9 are firmly engaged and thereby the position shift of the seal tube 8 in the axial direction relative to the permanent magnets 6 can be prevented.

Alternatively, in the above second embodiment, the engagement surface of the inner engagement protrusion 8a, which engages with the outer circumferential edge of the end plate 9, is the annular tapered surface whose inner diameter decreases toward the end edge of the seal tube 8 in the axial direction. By forming the engagement surface as the annular tapered surface, the position of the seal tube 8 relative to the end plate 9 is naturally guided to the proper position by the annular tapered surface. In addition, the permanent magnets 6, which are aligned in the axial direction, are subject to the clamping force from both sides, so that the permanent magnets 6 can be held firmly also in the axial direction.

In addition, in the above embodiments, the outer engagement protrusion 8b is also formed on the circumferential outer edge at the one end of the seal tube 8 in the axial direction to engage with the circumferential inner edge of the armor ring 7. Therefore, the position shift of the seal tube 8 in the axial direction relative to the armor ring 7 can be prevented. In other words, the position shift of the armor ring 7 in the axial direction relative to the seal tube 8 can be prevented.

In the above embodiment, the outer engagement protrusion 8b is formed on the circumferential outer edge also at the other end of the seal tube 8 in the axial direction to engage with the circumferential inner edge of the armor ring 7. Thus, it is preferable to form the outer engagement protrusions 8b not only at the one end of the seal tube 8 but also at the other end, i.e., the outer engagement protrusions 8b are formed at both ends of the seal tube 8 in the axial direction. According to this, the position shift of the seal tube 8 in both directions along the axial direction relative to the armor ring 7 can be prevented. In other words, the position shift of the armor ring 7 in both directions along the axial direction relative to the seal tube 8 can be prevented.

Furthermore, in the above first embodiment, the engagement surface of the outer engagement protrusion 8b, which engages with the circumferential inner edge of the armor ring 7, is the annular flat surface perpendicular to the axial direction. By forming the engagement surface as the annular flat surface perpendicular to the axial direction, the seal tube 8 and the armor ring 7 are firmly engaged and thereby the position shift of the seal tube 8 in the axial direction relative to the armor ring 7 can be securely prevented. In other words, the position shift of the armor ring 7 in the axial direction relative to the seal tube 8 can be securely prevented.

Alternatively, in the above second embodiment, the engagement surface of the outer engagement protrusion 8b, which engages with the circumferential inner edge of the armor ring 7, is the annular tapered surface whose outer diameter increases toward the end edge of the seal tube 8 in the axial direction. By forming the engagement surface as the annular tapered surface, the position of the armor ring 7 relative to the seal tube 8 is naturally guided to the proper position by the annular tapered surface. In addition, the armor ring 7, which is divided to be aligned in the axial direction, is subjected to the clamping force from both sides, so that the armor ring 7, which is divided, can be held firmly also in the axial direction.

Although several embodiments have been described herein, it is to be understood that other variations and modifications of the embodiments are possible in light of the above-disclosed contents. All the configurational elements of the above embodiments and all the features recited in the claims can be arbitrarily combined as long as they do not contradict each other. For example, the inner engagement protrusion 8a and the outer engagement protrusion 8b are preferably formed at both ends of the seal tube 8, but may be provided at only one of the two ends. It is also possible for the inner engagement protrusion 8a to be provided at both ends while the outer engagement protrusion 8b is provided at only one of the two ends.

In addition, the form of the engagement surfaces of the inner engagement protrusion 8a and the outer engagement protrusion 8b can also be selected as desired. For example, the engagement surface of the inner engagement protrusion 8a at the one end may be the annular flat surface perpendicular to the axial direction, and the engagement surface of the inner engagement protrusion 8a at the other end may be the above-described annular tapered surface. Alternatively, the engagement surface of the inner engagement protrusion 8a may be the annular plane perpendicular to the axial direction, and the engagement surface of the outer engagement protrusion 8b may be the above-described annular tapered surface.

Note that the electrical rotating device 1, including the rotor 2 in the above embodiments, is an electrical generator, but the rotor of the present disclosure can also be applied to an electrical motor that receives electrical power and then outputs driving power. In other words, the rotor of the present disclosure can be applied to an electrical rotating device such as an electrical generator or an electrical motor. In addition, the axial flow passages P3 are formed on the radially outer surfaces of the permanent magnets 6 in the above embodiments, but they may also be formed on the radially inner surfaces of the permanent magnets 6. That is, in this case, the axial flow passages P3 are formed between the rotor core 5 and the permanent magnets 6. Also in this case, the coolant flowing in the axial flow passages P3 may move to the outer surfaces of the permanent magnets 6 through the seams of the permanent magnets 6 adjacent in the axial direction, and the above-described seal tube 8 can prevent the coolant from leaking to the outside of the rotor 2.

The entire contents of Japanese Patent Application No. 2023-143394 (filed September 5, 2023) are hereby incorporated herein by reference.

### EXPLANATIONS OF REFERENCE SIGNS

- 1: electrical rotating device
- 2: rotor
- 5: rotor core
- 6: permanent magnet
- 7: armor ring
- 7a: divided armor ring
- 8: seal tube
- 8a: inner engagement protrusion
- 8b: outer engagement protrusion
- 9: end plate
- O: rotational axis (of the rotor 2)

## Claims

1. A rotor of an electrical rotating device comprising:
a rotor core;
a plurality of permanent magnets mounted on an outer circumferential surface of the rotor core to be aligned in a circumferential direction;
an armor ring divided into several pieces in an axial direction that is a direction of a rotational axis of the rotor to hold the permanent magnets from outside;
a seal tube sandwiched between the permanent magnets and the armor ring; and
a pair of end plates that clamp the rotor core and the permanent magnets from both sides in the axial direction,
wherein an inner engagement protrusion is formed on a circumferential inner edge at one end of the seal tube in the axial direction to engage with an outer circumferential edge of the end plate.

2. The rotor of the electrical rotating device according to claim 1, wherein
the inner engagement protrusion is formed also on a circumferential inner edge at another end of the seal tube in the axial direction to engage with an outer circumferential edge of the end plate.

3. The rotor of the electrical rotating device according to claim 1 or 2, wherein
an engagement surface of the inner engagement protrusion, which engages with the outer circumferential edge of the end plate, is an annular flat surface perpendicular to the axial direction.

4. The rotor of the electrical rotating device according to claim 1 or 2, wherein
an engagement surface of the inner engagement protrusion, which engages with the outer circumferential edge of the end plate, is an annular tapered surface whose inner diameter decreases toward an end edge of the seal tube in the axial direction.

5. The rotor of the electrical rotating device according to claim 1 or 2, wherein
an outer engagement protrusion is also formed on a circumferential outer edge at the one end of the seal tube in the axial direction to engage with a circumferential inner edge of the armor ring.

6. The rotor of the electrical rotating device according to claim 5, wherein
the outer engagement protrusion is formed also on a circumferential outer edge at another end of the seal tube in the axial direction to engage with a circumferential inner edge of the armor ring.

7. The rotor of the electrical rotating device according to claim 6, wherein
an engagement surface of the outer engagement protrusion, which engages with the circumferential inner edge of the armor ring, is an annular flat surface perpendicular to the axial direction.

8. The rotor of the electrical rotating device according to claim 6, wherein
an engagement surface of the outer engagement protrusion, which engages with the circumferential inner edge of the armor ring, is an annular tapered surface whose outer diameter increases toward an end edge of the seal tube in the axial direction.
